(19) Europäisches Patentamt / European Patent Office / Office européen des brevets

(11) **EP 4 239 725 A1**

(12) **EUROPEAN PATENT APPLICATION**
published in accordance with Art. 153(4) EPC

(43) Date of publication:
**06.09.2023 Bulletin 2023/36**

(21) Application number: **21886487.4**

(22) Date of filing: **12.07.2021**

(51) International Patent Classification (IPC):
*H01M 4/525* (2010.01)    *H01M 4/505* (2010.01)
*H01M 4/36* (2006.01)    *H01M 10/052* (2010.01)
*C01G 53/00* (2006.01)

(52) Cooperative Patent Classification (CPC):
**C01G 53/00; H01M 4/36; H01M 4/505;**
**H01M 4/525; H01M 10/052;** Y02E 60/10

(86) International application number:
**PCT/KR2021/008864**

(87) International publication number:
**WO 2022/092488 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.10.2020 KR 20200142247**

(71) Applicant: **Samsung SDI Co., Ltd.**
**Yongin-si, Gyeonggi-do 17084 (KR)**

(72) Inventors:
• **AHN, Kiyong**
**Yongin-si, Gyeonggi-do 17084 (KR)**

• **JUN, Dowook**
**Yongin-si, Gyeonggi-do 17084 (KR)**
• **KONG, Youngsun**
**Yongin-si, Gyeonggi-do 17084 (KR)**
• **KWON, Seonyoung**
**Yongin-si, Gyeonggi-do 17084 (KR)**
• **KIM, Minkyu**
**Yongin-si, Gyeonggi-do 17084 (KR)**
• **KIM, Min Ju**
**Yongin-si, Gyeonggi-do 17084 (KR)**
• **LEE, Dookyun**
**Yongin-si, Gyeonggi-do 17084 (KR)**
• **HONG, Kijoo**
**Yongin-si, Gyeonggi-do 17084 (KR)**

(74) Representative: **Marks & Clerk LLP**
**15 Fetter Lane**
**London EC4A 1BW (GB)**

(54) **CATHODE ACTIVE MATERIAL FOR LITHIUM SECONDARY BATTERY, PREPARATION METHOD THEREFOR, AND LITHIUM SECONDARY BATTERY COMPRISING SAME**

(57)    According to an embodiment, provided is a cathode active material for a lithium secondary battery, the cathode active material including a nickel-based composite metal oxide including a secondary particle in which a plurality of primary particles are agglomerated, wherein the secondary particle includes a central portion and a surface portion, the surface portion includes a nickel-based composite metal oxide doped with manganese, and an amount of manganese present in the grain boundaries of the plurality of primary particles present in the surface portion is greater than an amount of manganese present inside the primary particles.

【Figure 1】

## Description

**[Technical Field]**

A cathode active material for a lithium secondary battery, a preparation method therefor, and a lithium secondary battery including the same are disclosed.

**[Background Art]**

In order to meet down-sizing and high performance of various devices, lithium secondary batteries have become increasingly important in terms of high energy density as well as down-sizing and weight reduction. In addition, high capacity and high-temperature stability of lithium secondary batteries, and safety at a high voltage become important to apply to electric vehicles and the like.

Various cathode materials have been investigated to realize lithium secondary batteries for applications to the uses.

Nickel-based lithium transition metal oxide simultaneously including Ni, Co, Mn, and the like provides high discharge capacity per unit weight, compared with conventional $LiCoO_2$, but has relatively low capacity and discharge capacity per unit volume due to low packing density. In addition, safety of the nickel-based lithium transition metal oxide may be deteriorated, when driven at a high voltage.

Accordingly, a method for improving structural stability and cycle-life of the nickel-based lithium transition metal oxide is required.

**[Disclosure]**

[Technical Problem]

An embodiment provides a cathode active material having improved structural stability and effective for improving cycle-life of a lithium secondary battery.

Another embodiment provides a method of preparing the cathode active material.

Another embodiment provides a lithium secondary battery having improved charge/discharge efficiency and cycle-life characteristics by employing a cathode including the cathode active material.

[Technical Solution]

An embodiment provides a cathode active material including a nickel-based composite metal oxide including a secondary particle in which a plurality of primary particles are agglomerated, wherein the secondary particle includes a central portion and a surface portion, the surface portion includes a nickel-based composite metal oxide doped with manganese, and an amount of manganese present in the grain boundaries of the plurality of primary particles present in the surface portion is greater than an amount of manganese present inside the primary particles.

The nickel-based composite metal oxide doped with manganese may include 0.1 mol% to 5 mol% of manganese based on the total amount (mol%) of the metal of the nickel-based composite metal oxide.

The central portion of the secondary particle may not include the nickel-based composite metal oxide doped with manganese.

The cathode active material may have a concentration gradient in which the concentration of manganese continuously decreases from the surface portion of the secondary particle to the central portion of the secondary particle.

The surface portion of the secondary particle may be within 50 length% of the total distance from the center to the outermost surface of the secondary particle in the direction from the outermost surface to the center.

The nickel-based composite metal oxide doped with manganese may be represented by Chemical Formula 1:

$$[\text{Chemical Formula 1}] \qquad LiNi_{1-x-y-z}Co_xMn_yM_zO_2$$

In Chemical Formula 1, $0 < x \leq 0.05$, $0.001 \leq y \leq 0.05$, and $0 \leq z \leq 0.02$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

The nickel-based composite metal oxide doped with manganese may include a layered structure oxide, a spinel structure oxide, a halite structure oxide, or a combination thereof.

The surface portion of the secondary particle may further include lithium manganese oxide.

The lithium manganese oxide may be $LiMnO_2$, $Li_2Mn_2O_3$, $LiMn_2O_4$, or a combination thereof.

A $FWHM_{(003)}$ value of the cathode active material by X-ray diffraction analysis may be in the range of 0.1° to 0.2° (degree).

A c-axis length (d-spacing) value of the primary particles present in the surface portion of the secondary particle of the cathode active material may be greater than or equal to 4.88 Å.

A size of the primary particles of the cathode active material may be 100 nm to 800 nm.

Another embodiment provides a method of preparing a cathode active material for a lithium secondary battery that includes

preparing a dispersion in which a nickel-based composite metal compound including secondary particles in which a plurality of primary particles are agglomerated is dispersed in a solvent(wherein the secondary particles have a central portion and a surface portion); adding an aqueous solution of manganese salt and a precipitant to the dispersion in an atmosphere having a reduced oxygen content to prepare a nickel-based composite metal compound coated with a manganese salt(wherein the manganese salt is coated on the primary particles of the surface portion); and drying the nickel-based composite metal compound coated with the manganese salt and mixing it with a lithium source followed by heat-treatment.

The nickel-based composite metal compound may be represented by Chemical Formula 2 or Chemical Formula 3:

$$[\text{Chemical Formula 2}] \qquad Ni_{1-x-y-z}Co_xM_y(OH)_2Mn_wO_q$$

In Chemical Formula 2, $0 < x \leq 0.05$, $0 \leq y \leq 0.02$, $0 < w \leq 3$, $0 < q \leq 4$, and M is at least one metal element selected from Ni, Mn, Al, Cr, Fe, V, Mg, Ti, Zr, Nb, Mo, W, Cu, Zn, Ga, In, Sn, La, and Ce,

$$[\text{Chemical Formula 3}] \qquad Ni_{1-x-y-z}Co_xM_yO_2Mn_wO_q$$

in Chemical Formula 3, $0 < x \leq 0.05$, $0 \leq y \leq 0.02$, $0 < w \leq 3$, $0 < q \leq 4$, and M is at least one metal element selected from Ni, Mn, Al, Cr, Fe, V, Mg, Ti, Zr, Nb, Mo, W, Cu, Zn, Ga, In, Sn, La, and Ce.

The manganese salt may be selected from manganese sulfate, manganese nitrate, manganese acetate, and a combination thereof.

The atmosphere having the reduced oxygen content may be obtained by injecting an inert gas, and the inert gas may be nitrogen ($N_2$).

An injection rate of the inert gas may be 50 sccm to 5000 sccm.

The drying may be performed at 100 °C to 200 °C.

The preparing method may further include heat-treating at 350 °C to 600 °C before mixing the nickel-based composite metal compound coated with the manganese salt with a lithium source.

Another embodiment provides a lithium secondary battery including a cathode including the cathode active material; an anode including an anode active material; and electrolyte.

Other specific details of embodiments are included in the detailed description below.

[Advantageous Effects]

In the cathode active material, manganese is coated in a grain boundary between primary particles present at a certain depth of secondary particles of the cathode active material, it is possible to maximize capacity, improve cycle-life, and at the same time increase initial charge/discharge efficiency. In addition, it is possible to secure a functional layer with high surface activity by evenly coating manganese on the grain boundaries of the primary particles of the cathode active material in a wet manner.

**[Description of the Drawings]**

FIG. 1 is a schematic cross-sectional view showing a cathode active material in which grain boundaries of primary particles are coated according to an embodiment.

FIG. 2 is a perspective view schematically illustrating a representative structure of a lithium secondary battery.

FIG. 3 is a STEM image (HAADF) showing a cross section of a plurality of primary particles of a cathode active material.

FIG. 4 is a graph showing the content of manganese distributed in a plurality of primary particles (A, B, and C) of FIG. 3.

FIG. 5 is a scanning transmission electron microscopy (STEM) image (high-angle annular dark-field (HAADF)) of a cross-section of a surface portion and a central portion of a cathode active material.

FIG. 6 is a STEM photograph of the surface of the primary particles in the surface portion of the secondary particles of the cathode active material of Example 1.

FIG. 7 is a STEM image of the inside of primary particles in the surface portion of secondary particles of the cathode active material of Example 1.

FIG. 8 is a STEM photograph of primary particles of the cathode active material of Comparative Example 1.

[Mode for Invention]

Hereinafter, embodiments of the present invention are described in detail. However, these are presented as examples, and thus the present invention is not limited and the present invention is only defined by the scope of the claims to be described later.

As used herein, when specific definition is not otherwise provided, It will be understood that when an element such as a layer, film, region, or substrate is referred to as being "on" another element, it can be directly on the other element or intervening elements may also be present.

In the present invention, the "particle size" or "particle diameter" may be defined as the average particle diameter (D50) based on 50% of the volume cumulative amount in the particle size-distribution curve. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of 60 W, and an average particle diameter (D50) in 50% reference of the particle size distribution in a measuring apparatus may be calculated.

In the present specification, the "center" means a point that bisects the longest axis of a particle.

The "primary particle" may be a crystalline particle or a grain. A plurality of the primary particles forms grain boundaries and is agglomerated together to form a secondary particle, wherein the primary particles may have various shapes such as a spherical shape or a similar spherical shape (a flake shape and the like).

The "secondary particle" refers to a particle that comprises the plurality of the primary particles but is not an agglomerate of other particles or a particle that is no longer agglomerated and may have a spherical shape or a pseudo spherical shape.

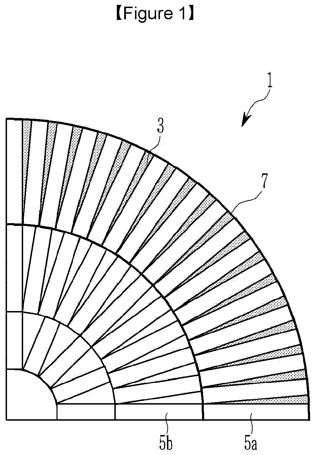

Hereinafter, a cathode active material for a lithium secondary battery is described with reference to FIG. 1. FIG. 1 is a schematic cross-sectional view showing a cathode active material in which grain boundaries of primary particles are coated according to an embodiment.

Referring to FIG. 1, a cathode active material according to an embodiment includes a nickel-based composite metal oxide including secondary particles 1 in which a plurality of primary particles 3 are agglomerated.

The secondary particle 1 includes a central portion 5a and a surface portion 5b and the surface portion 5b includes a nickel-based composite metal oxide doped with manganese (hereinafter, also referred to as a manganese-doped nickel-based composite metal oxide) which is present in the grain boundary 7 of the plurality of primary particles 3. That is, the cathode active material may include a manganese-doped nickel-based composite metal oxide which is coated at grain boundaries in the surface portion 5b corresponding to a predetermined depth.

The central portion 5a may refer to a region of less than or equal to 50 length% to less than or equal to 80 length% from the center, for example of less than or equal to 75 length% from the center, less than or equal to 70 length%, less than or equal to 65 length%, less than or equal to 60 length%, less than or equal to 55 length%, or less than or equal to 50 length% with respect to a total distance (100 length%) from the center to the outermost surface of the secondary particle 1 or a region excluding the region within 2 μm from the outermost surface of the secondary particle 1.

The surface portion 5b is a portion excluding the central portion 5a, and a region of less than or equal to 20 length% from the outermost surface to less than or equal to 50 length%, for example less than or equal to 25 length%, less than or equal to 30 length%, less than or equal to 20 length%, less than or equal to 40 length%, less than or equal to 45 length%, or less than or equal to 50 length% from the outermost surface with respect to the total distance (100 length%) from the center to the outermost surface.

In an embodiment, a region from the surface portion 5b of the secondary particle to the central portion 5a of the secondary particle may be a region of less than or equal to 1000 nm, for example less than or equal to 400 nm, less than or equal to 450 nm, less than or equal to 500 nm, less than or equal to 550 nm, less than or equal to 600 nm, less than or equal to 650 nm, less than or equal to 700 nm, less than or equal to 750 nm, less than or equal to 800 nm, less than or equal to 850 nm, less than or equal to 900 nm, or less than or equal to 950 nm.

The surface portion 5b is a region where the primary particles 3 are coated on the grain boundaries. Herein, 2 to 3 primary particles may be included based on the cross-section of the surface portion 5b of the secondary particles 1. In an embodiment, the size of the primary particles 3 may be 100 nm to 800 nm. The size of the primary particles 3 may be greater than or equal to 50 nm, greater than or equal to 100 nm, greater than or equal to 150 nm, greater than or equal to 200 nm, greater than or equal to 250 nm, greater than or equal to 300 nm, greater than or equal to 350 nm, greater than or equal to 400 nm, greater than or equal to 450 nm, greater than or equal to 500 nm, greater than or equal to 550 nm, greater than or equal to 600 nm, greater than or equal to 650 nm, greater than or equal to 700 nm, or greater than or equal to 750 nm. In another embodiment, the size of the primary particle 3 may be less than or equal to 800 nm, less than or equal to 750 nm, less than or equal to 700 nm, less than or equal to 650 nm, less than or equal to 600 nm, less than or equal to 550 nm, less than or equal to 500 nm, less than or equal to 450 nm, less than or equal to 400 nm, less than or equal to 350 nm, less than or equal to 300 nm, less than or equal to 250 nm, less than or equal to 200 nm, or less than or equal to 150 nm.

The surface portion 5b includes a manganese-doped nickel-based composite metal oxide between the primary particles 3 (i.e., grain boundaries), and an amount of manganese present in the grain boundaries 7 of the plurality of primary particles 3 present in the surface portion 5b is higher than an amount of manganese present inside the primary particle 3. That is, the amount of manganese coated on the grain boundaries of the primary particles 3 is higher than the amount coated on the inside of the primary particles 3.

The "grain boundary" means an interface of two adjacent primary particles 3. In an embodiment, the grain boundary may mean a region of less than or equal to 20 length% from the outermost surface based on the total distance from a center of the primary particle 3 to the outermost surface (the interface between the adjacent primary particles 3) to a region of less than or equal to 40 length% from the outermost surface, for example, a region of less than or equal to 25 length%, a region of less than or equal to 30 length%, or a region of less than or equal to 35 length% from the outermost surface. The inside of the primary particle 3 means a portion excluding the grain boundary. In an embodiment, the inside of the primary particle 3 may mean a region of less than or equal to 60 length% from the center of the primary particle 3 to less than or equal to 80 length% from the center of the primary particle 3, based on the total distance from the center of the primary particle to the outermost surface (the interface between adjacent primary particles 3), for example, less than or equal to 40 length%, less than or equal to 45 length%, less than or equal to 50 length%, less than or equal to 55 length%, less than or equal to 60 length%, less than or equal to 65 length%, less than or equal to 70 length%, less than or equal to 75 length%, or less than or equal to 80 length% from the center of the primary particle.

In an embodiment, the manganese-doped nickel-based composite metal oxide may include 0.1 mol% to 5 mol% of manganese based on the total amount (mol%) of metals (metals other than lithium, hereinafter the same) of the nickel-based composite metal oxide. A manganese concentration of the surface portion 5b of the secondary particle 1 may be as high as a manganese content of the manganese-doped nickel-based composite metal oxide compared to the manganese concentration of the central portion 5a. That is, the concentration of manganese in the surface portion 5b of the secondary particle 1 may further include 0.1 mol% to 5 mol% of manganese relative to the concentration of manganese present in the central portion 5a. By including 0.1 mol% to 5 mol% of manganese based on the total amount (mol%) of the metal in the nickel-based composite metal oxide, structural stability and cycle characteristics of the cathode active material may be improved.

In an embodiment, the manganese content relative to the total amount (mol%) of metals (metals other than lithium) of the manganese-doped nickel-based composite metal oxide may be greater than or equal to 0.1 mol%, greater than or equal to 0.2 mol%, greater than or equal to 0.3 mol%, greater than or equal to 0.4 mol%, greater than or equal to 0.5 mol%, greater than or equal to 0.6 mol%, greater than or equal to 0.7 mol%, greater than or equal to 0.8 mol%, greater than or equal to 0.9 mol%, greater than or equal to 1.0 mol%, greater than or equal to 1.1 mol%, greater than or equal to 1.2 mol%, greater than or equal to 1.3 mol%, greater than or equal to 1.4 mol%, greater than or equal to 1.5 mol%, greater than or equal to 1.6 mol%, greater than or equal to 1.7 mol%, greater than or equal to 1.8 mol%, greater than or equal to 1.9 mol%, greater than or equal to 2.0 mol%, greater than or equal to 2.1 mol%, greater than or equal to 2.2 mol%, greater than or equal to 2.3 mol%, greater than or equal to 2.4 mol%, greater than or equal to 2.5 mol%, greater than or equal to 2.6 mol%, greater than or equal to 2.7 mol%, greater than or equal to 2.8 mol%, greater than or equal to 2.9 mol%, greater than or equal to 3.0 mol%, greater than or equal to 3.1 mol%, greater than or equal to 3.2 mol%, greater than or equal to 3.3 mol%, greater than or equal to 3.4 mol%, greater than or equal to 3.5 mol%, greater than or equal to 3.6 mol%, greater than or equal to 3.7 mol%, greater than or equal to 3.8 mol%, greater than or equal to 3.9 mol%, greater than or equal to 4.0 mol%, greater than or equal to 4.1 mol%, greater than or equal to 4.2 mol%, greater than or equal to 4.3 mol%, greater than or equal to 4.4 mol%, greater than or equal to 4.5 mol%, greater than or equal to 4.6 mol%, greater than or equal to 4.7 mol%, greater than or equal to 4.8 mol%, greater than or equal to 4.9 mol%, or greater than or equal to 5.0 mol%.

In an embodiment, the manganese content relative to the total amount (mol%) of metals (metals other than lithium) of the manganese-doped nickel-based composite metal oxide may be less than or equal to 5.0 mol%, less than or equal to 4.9 mol%, less than or equal to 4.8 mol%, less than or equal to 4.7 mol%, less than or equal to 4.6 mol%, less than or equal to 4.5 mol%, less than or equal to 4.4 mol%, less than or equal to 4.3 mol%, less than or equal to 4.2 mol%, less than or equal to 4.1 mol%, less than or equal to 4.0 mol%, less than or equal to 3.9 mol%, less than or equal to 3.8 mol%, less than or equal to 3.7 mol%, less than or equal to 3.6 mol%, less than or equal to 3.5 mol%, less than or equal to 3.4 mol%, less than or equal to 3.3 mol%, less than or equal to 3.2 mol%, less than or equal to 3.1 mol%, less than or equal to 3.0 mol%, less than or equal to 2.9 mol%, less than or equal to 2.8 mol%, less than or equal to 2.7 mol%, less than or equal to 2.6 mol%, less than or equal to 2.5 mol%, less than or equal to 2.4 mol%, less than or equal to 2.3 mol%, less than or equal to 2.2 mol%, less than or equal to 2.1 mol%, less than or equal to 2.0 mol%, less than or equal to 1.9 mol%, less than or equal to 1.8 mol%, less than or equal to 1.7 mol%, less than or equal to 1.6 mol%, less than or equal to 1.5 mol%, less than or equal to 1.4 mol%, less than or equal to 1.3 mol%, less than or equal to 1.2 mol%, less than or equal to 1.1 mol%, less than or equal to 1.0 mol%, less than or equal to 0.9 mol%, less than or equal to 0.8 mol%, less than or equal to 0.7 mol%, less than or equal to 0.6 mol%, less than or equal to 0.5 mol%, less than or equal to 0.4 mol%, less than or equal to 0.3 mol%, less than or equal to 0.2 mol%, or less than or equal to 0.1 mol%.

In an embodiment, the cathode active material may have a concentration gradient in which the concentration of manganese continuously decreases from the surface portion 5b to the central portion 5a of the secondary particle 1. The surface portion 5b of the secondary particle 1 may include a first surface portion close to the outermost surface and a second surface portion close to the center, and the first surface portion may have a higher concentration of manganese than the second surface portion.

In an embodiment, the manganese content ratio (molar ratio) of the surface portion 5b to the central portion 5a of the secondary particle 1 may be 5 to 15. For example, the manganese content ratio of the surface portion 5b to the central portion 5a of the secondary particle 1 may be greater than or equal to 5, greater than or equal to 6, greater than or equal to 7, greater than or equal to 8, greater than or equal to 9, greater than or equal to 10, greater than or equal to 11, greater than or equal to 12, greater than or equal to 13, or greater than or equal to 14, and less than or equal to 15, less than or equal to 14, less than or equal to 13, less than or equal to 12, less than or equal to 11, less than or equal to 10, less than or equal to 9, less than or equal to 8, less than or equal to 7, or less than or equal to 6. In an embodiment, the manganese content ratio of the surface portion 5b to the central portion 5a of the secondary particle 1 may be 10.

In another embodiment, the central portion 5a of the secondary particle may not include manganese-doped nickel-based composite metal oxide.

As described above, the cathode active material according to an embodiment includes a nickel-based composite metal oxide doped with manganese at a high concentration between the primary particles present in the surface portion 5b from the outermost surface of the secondary particles 1 to a certain depth. This is different from the conventional configuration of coating the surface of the secondary particle, and the structural stability of the cathode active material may be improved by coating the primary particle at a certain depth on the outermost surface.

By including the manganese-doped nickel-based composite metal oxide 7 (nickel-based lithium metal oxide) in the grain boundary of the primary particles 3, lithium may be smoothly diffused to the central portion 5a of the secondary particles 5. and the elution of nickel ions from the central portion 5a of the secondary particle 5 may be suppressed. In addition, a side reaction between the primary particles and the electrolyte in the central portion 5a of the secondary particles 5 may be suppressed. Accordingly, cycle characteristics of a lithium secondary battery including the cathode active material having the above structure may be improved.

In addition, the content of residual lithium on the surface of the plurality of primary particles 3 disposed inside the secondary particles 5 is reduced to suppress deterioration of the cathode active material and reduce gas generation, thereby improving thermal stability of the lithium secondary battery. The manganese-doped nickel-based composite metal oxide disposed in the grain boundary between adjacent primary particles 3 prevents damage to the surface of primary particles that occurs during the washing process of the cathode active material, thereby preventing deterioration in cycle-life characteristics of lithium secondary batteries.

The manganese-doped nickel-based composite metal oxide 7 disposed in the grain boundary between adjacent primary particles 3 may absorb a volume change caused by charging and discharging of the primary particles and suppresses cracking between the primary particles for a long period of time. Even after discharging, deterioration of the lithium secondary battery may be prevented by suppressing a decrease in mechanical strength of the cathode active material. In addition, by doping the primary particles with manganese, the crystal structure of the nickel-based metal composite oxide is stabilized, cycle characteristics of the lithium secondary battery including the cathode active material may be further improved.

In an embodiment, the surface portion 5b of the secondary particle may further include lithium manganese oxide. The lithium manganese oxide may be selected from $LiMnO_2$, $Li_2Mn_2O_3$, $LiMn_2O_4$, or a combination thereof.

In an embodiment, the manganese-doped nickel-based composite metal oxide may be a layered oxide, a spinel oxide, a rock salt oxide, or a combination thereof. In another embodiment, the manganese-doped nickel-based composite metal oxide is mostly a layered oxide, and a spinel structure oxide and a halite structure oxide may be partially mixed.

The manganese-doped nickel-based composite metal oxide may be represented by Chemical Formula 1:

[Chemical Formula 1] $LiNi_{1-x-y-z}Co_xMn_yM_zO_2$

In Chemical Formula 1, $0 < x \leq 0.05$, $0.001 \leq y \leq 0.05$, and $0 \leq z \leq 0.02$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

In an embodiment, the compound of Chemical Formula 1 may be $LiNi_{1-x-y}Co_xMn_yO_2$, $LiNi_{1-x-y-z}Co_xMn_yAl_zO_2$, or $LiNi_{1-x-y-z}Co_xMn_{y+z}O_2$.

Since the manganese-doped nickel-based composite metal oxide contains a high nickel content, capacity may be maximized. When nickel is contained in a high content, there may be a problem that the capacity is high but the cycle-life is low, but the deterioration in the cycle-life may be solved by doping a certain amount of manganese.

In an embodiment, y in Chemical Formula 1 may be $0.001 \leq y \leq 0.03$. When y in Chemical Formula 1 exceeds 0.05, manganese may be agglomerated with each other. In an embodiment, the manganese-doped nickel-based composite metal oxide 7 may be $Li[(NiCoAl)_{0.995}Mn_{0.005}]O_2$, $Li[(NiCoAl)_{0.99}Mn_{0.01}]O_2$, $Li[(NiCoAl)_{0.985}Mn_{0.015}]O_2$, $Li[(NiCoAl)_{0.98}Mn_{0.02}]O_2$, $Li[(NiCoAl)_{0.975}Mn_{0.025}]O_2$, $Li[(NiCoAl)_{0.97}Mn_{0.03}]O_2$, and the like.

In an embodiment, when XRD is measured on the cathode active material powder including the manganese-doped nickel-based composite metal oxide, the $FWHM_{(003)}$ value, which is a full width at half maximum value of the (003) peak, may be 0.1 ° to 0.2 ° ($2\theta$).

In an embodiment, the full width at half maximum value may be greater than or equal to 0.1°, for example greater than or equal to 0.11°, greater than or equal to 0.12°, greater than or equal to 0.13°, greater than or equal to 0.14°, greater than or equal to 0.15°, greater than or equal to 0.16°, greater than or equal to 0.17°, greater than or equal to 0.18°, or greater than or equal to 0.19° and, for example, less than or equal to 0.20°, less than or equal to 0.19°, less than or equal to 0.18°, less than or equal to 0.17°, less than or equal to 0.16°, less than or equal to 0.15°, less than or equal to 0.14°, less than or equal to 0.13°, less than or equal to 0.12°, or less than or equal to 0.11°.

The full width at half maximum value increases as the coating amount of manganese increases even when fired at the same temperature, and when the full width at half maximum value is 0.1 ° to 0.2 ° ($2\theta$) or more, it can be seen that manganese is coated on the cathode active material, but when it is 0.1 ° ($2\theta$) or less, it cannot be regarded as being uniformly coated with manganese.

In an embodiment, the c-axis length (d-spacing) value of the primary particles present in the surface portion 5b of the secondary particles 1 of the cathode active material including the manganese-doped nickel-based composite metal oxide may be greater than or equal to 4.88 Å. Since the c-axis length value increases as manganese is coated, it can be confirmed whether manganese is coated by comparing the c-axis length. When manganese is coated on the grain boundaries of the primary particles present in the surface portion 5b of the secondary particles 1, the c-axis length of the primary particles increases as the manganese is coated, but the c-axis length of the primary particles of the central portion 5a of the secondary particles 1 has little change. That is, by comparing the c-axis lengths of the primary particles of the central portion 5a and the surface portion 5b of the secondary particle 1, it can be confirmed whether manganese is coated only on the surface or grain boundary of the primary particles 3 of the surface portion 5b of the secondary particle. Through this, it can be seen that the content of manganese is high and the content of nickel is relatively reduced on the surfaces or grain boundaries of the primary particles of the surface portion 5b of the secondary particle.

In an embodiment, the c-axis length of the primary particle of the surface portion 5b of the secondary particle may be greater than or equal to 4.88 Å, greater than or equal to 4.89 Å, greater than or equal to 4.90 Å, greater than or equal to 4.91 Å, greater than or equal to 4.92 Å, greater than or equal to 4.93 Å, greater than or equal to 4.94 Å, greater than or equal to 4.95 Å, greater than or equal to 4.96 Å, greater than or equal to 4.97 Å, greater than or equal to 4.98 Å, greater than or equal to 4.99 Å, or greater than or equal to 5.00 Å.

In an embodiment, the c-axis length of the primary particle present in the surface portion 5b of the secondary particle 1 may be greater than the c-axis length of the primary particle present in the central portion 5a of the secondary particle 1. For example, the c-axis length of the primary particle present in the surface portion 5b of the secondary particle 1 may be 4.94 Å, and the c-axis length of the primary particle in the central portion 5a of the secondary particle 1 may be 4.83 Å.

In an embodiment, the c-axis length of the primary particle of the central portion 5a of the secondary particle 1 and the c-axis length of the surface portion of the secondary particle inside the primary particle may be the same.

The cathode active material is prepared according to the following preparing method.

First, a nickel-based composite metal compound including secondary particles in which a plurality of primary particles are agglomerated and a solvent are put into a reactor and dispersed to prepare a dispersion.

The solvent may be distilled water.

The nickel-based composite metal compound, that is, the cathode active material precursor may be a compound represented by Chemical Formula 2 or Chemical Formula 3:

[Chemical Formula 2]     $Ni_{1-x-y-z}Co_xM_y(OH)_2Mn_wO_q$

In Chemical Formula 2, $0 < x \leq 0.05$, $0 \leq y \leq 0.02$, $0 < w \leq 3$, $0 < q \leq 4$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce,

[Chemical Formula 3]     $Ni_{1-x-y-z}Co_xM_yO_2Mn_wO_q$

wherein in Chemical Formula 1, $0 < x \leq 0.05$, $0 \leq y \leq 0.02$, $0 < w \leq 3$, $0 < q \leq 4$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

The compound represented by Chemical Formula 2 may be $Ni_{1-x}Co_x(OH)_2 \cdot Mn_wO_q$, $Ni_{1-x-y}Co_xAl_y(OH)_2 \cdot Mn_wO_q$, or $Ni_{1-x-y}Co_xMn_y(OH)_2 \cdot Mn_wO_q$, and the compound represented by Chemical Formula 3 may be $Ni_{1-x}Co_xO_2 \cdot Mn_wO_q$, $Ni_{1-x-y}Co_xAl_yO_2 \cdot Mn_wO_q$, or $Ni_{1-x-y}Co_xMn_yO_2 \cdot Mn_wO_q$.

The compound represented by Chemical Formula 2 is prepared through co-precipitation.

The nickel composite metal compound and the solvent are put into a reactor and stirred to prepare a dispersion and during stirring, an inert gas may be injected into the reactor. By injecting an inert gas into the reactor, the partial pressure of dissolved oxygen may be lowered. When dissolved oxygen is high, manganese exists as an oxide rather than a hydroxide, making it difficult to coat the surface of the nickel composite metal compound. Therefore, in order to prevent this, the reaction between the nickel composite metal compound and dissolved oxygen may be minimized by injecting an inert gas into the reactor to lower the partial pressure of dissolved oxygen.

The inert gas may be selected from $N_2$, He, Ar, and a combination thereof.

An injection rate of the inert gas may be 50 sccm to 5000 sccm. The injection rate of the inert gas may be, for example, greater than or equal to 500 sccm, greater than or equal to 1000 sccm, greater than or equal to 1500 sccm, greater than or equal to 2000 sccm, greater than or equal to 2500 sccm, greater than or equal to 3000 sccm, greater than or equal to 3500 sccm, greater than or equal to 4000 sccm, or greater than or equal to 4500 sccm.

The temperature of the reactor during stirring may be between 30 °C and 60 °C, for example between 40 °C and 50 °C, or 45 °C.

The stirring speed of the reactor may be 300 rpm to 600 rpm. The stirring speed of the reactor may be, for example, greater than or equal to 300 rpm, greater than or equal to 350 rpm, greater than or equal to 400 rpm, greater than or equal to 450 rpm, greater than or equal to 500 rpm, greater than or equal to 550 rpm, or greater than or equal to 600 rpm and less than or equal to 600 rpm, less than or equal to 550 rpm, less than or equal to 500 rpm, less than or equal to 450 rpm, less than or equal to 400 rpm, or less than or equal to 350 rpm.

An aqueous manganese salt solution and a precipitant are added to the dispersion in an atmosphere of reduced oxygen content by injecting an inert gas, to prepare a nickel-based composite metal compound coated with a manganese salt by a co-precipitation method.

At this time, the manganese salt may be coated on a grain boundary in the form of manganese hydroxide on the primary particles present on the surface portion of the secondary particles of the nickel-based composite metal hydroxide. The manganese salt may be selected from manganese sulfate ($MnSO_4$), manganese nitrate, manganese acetate, and hydrates thereof.

The precipitant may be NaOH. When the precipitant is NaOH, NaOH may serve as a pH adjusting agent in the reactor.

The pH of the reactor may be maintained at 8 to 13. The pH of the reactor is greater than or equal to 8, greater than or equal to 8.5, greater than or equal to 9, greater than or equal to 9.5, greater than or equal to 10, greater than or equal to 10.5, greater than or equal to 11, greater than or equal to 11.5, greater than or equal to 12, greater than or equal to 12.5, greater than or equal to 13, and greater than or equal to 13, and less than or equal to 12.5, less than or equal to 12, less than or equal to 11.5, less than or equal to 11, less than or equal to 10.5, less than or equal to 10, less than or equal to 9.5, less than or equal to 9, or less than or equal to 8.5.

The temperature of the reactor may be maintained at 20 °C to 50 °C. The temperature of the reactor may be greater than or equal to 20 °C, greater than or equal to 30 °C, and greater than or equal to 40 °C, or greater than or equal to 50 °C and less than or equal to 40 °C, and less than or equal to 30 °C.

The nickel-based composite metal compound coated with the manganese salt in the reactor may be dried in a vacuum dryer at a temperature of 100 °C to 200 °C. The drying may be drying using convection. When drying using convection, oxygen may flow in and manganese hydroxide may react with oxygen to become an oxide. The manganese hydroxide may react with oxygen to form manganese oxides such as $MnO_2$, $Mn_2O_3$, and $Mn_3O_4$.

After the drying, the dried nickel-based composite metal compound may be heat-treated at a temperature of 400 °C to 600 °C. The manganese hydroxide may become an oxide through the heat-treatment. The manganese hydroxide may become manganese oxide ($MnO_2$) through the heat-treatment.

Thereafter, a lithium source is mixed with the nickel-based composite metal compound and then fired to obtain a cathode active material that is a nickel-based composite metal oxide. The lithium source may be LiOH, $Li_2CO_3$, or hydrates thereof.

The firing temperature may be 600 °C to 800 °C, for example, for example greater than or equal to 600 °C, greater than or equal to 625 °C, greater than or equal to 650 °C, greater than or equal to 675 °C, greater than or equal to 700 °C, greater than or equal to 725 °C, greater than or equal to 750 °C, greater than or equal to 775 °C, and less than or equal to 800 °C, less than or equal to 775 °C, less than or equal to 750 °C, less than or equal to 725 °C, less than or equal to 700 °C, less than or equal to 675 °C, less than or equal to 650 °C, or less than or equal to 625 °C.

In another embodiment, a lithium secondary battery includes a cathode including the cathode active material, an anode including the anode active material; and an electrolyte.

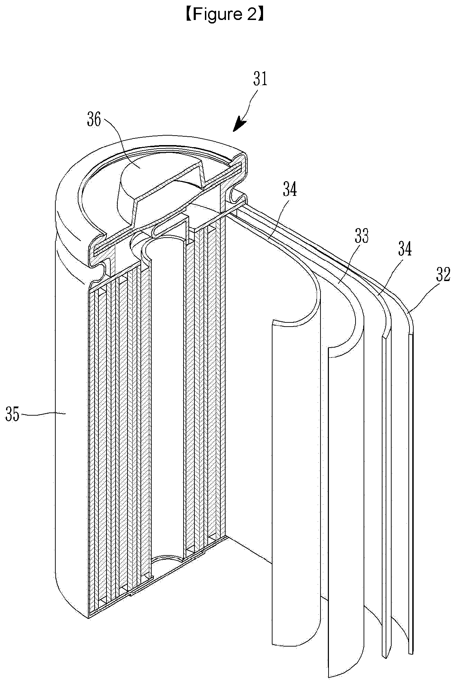

Hereinafter, a lithium secondary battery according to an embodiment will be described with reference to the drawings. FIG. 2 is a perspective view schematically illustrating a typical structure of a lithium secondary battery according to an embodiment.

Referring to FIG. 2, the lithium secondary battery 31 includes a cathode 33 including the cathode active material according to an embodiment, an anode 32, and a separator 34. The aforementioned cathode 33 including the cathode active material, anode 32, and separator 34 are wound or folded and accommodated in the battery case 35. Then, the organic electrolyte is injected into the battery case 35 and sealed using the cap assembly 36 to complete the lithium secondary battery 31. The battery case 35 may have a cylindrical shape, a square shape, a thin film shape, or the like.

The lithium secondary battery may be a lithium ion battery.

The cathode and the anode are manufactured by applying a composition for forming a cathode active material layer and a composition for forming an anode active material layer on a current collector, respectively, and drying the same.

The composition for forming the cathode active material is prepared by mixing a cathode active material, a conductive agent, a binder, and a solvent, and the cathode active material is as described above.

The binder is a component that assists in the binding of the active material and the conductive agent and the current collector, and is added in an amount of 1 to 50 parts by weight based on 100 parts by weight of the total weight of the cathode active material. Non-limiting examples of the binder may be polyvinylidene fluoride, polyvinyl alcohol, carboxylmethyl cellulose (CMC), starch, hydroxypropyl cellulose, recycled cellulose, polyvinylpyrrolidone, polytetrafluoroethylene, polyethylene, polypropylene, an ethylene-propylene-diene terpolymer (EPDM), sulfonated EPDM, a styrene butadiene rubber, a fluorine rubber, various copolymers, and/or the like. The binder may be included in an amount of 2 to 5 parts by weight based on the total weight, 100 parts by weight of the cathode active material. When the amount of the binder is within this range, the binding force of the active material layer to the current collector may be suitable or good.

The conductive agent is not particularly limited as long as it does not cause a chemical change of a battery, and has conductivity. Non-limiting examples of the conductive agent may include graphite such as natural graphite and/or artificial graphite; a carbon-based material such as carbon black, acetylene black, ketjen black, channel black, furnace black, lamp black, summer black, and/or the like; a conductive fiber such as a carbon fiber and/or a metal fiber, and/or the like; carbon fluoride; a metal powder such as an aluminum and/or nickel powder; zinc oxide, a conductive whisker such as potassium titanate, and/or the like; a conductive metal oxide such as a titanium oxide; and a conductive material such as a polyphenylene derivative, and/or the like. The amount of the conductive agent may be 2 to 5 parts by weight based on the total weight of 100 parts by weight of the cathode active material. When the amount of the conductive agent is within this range, the conductivity characteristics of the resultant electrode may be improved.

Non-limiting examples of the solvent may be N-methyl pyrrolidone, and/or the like. The amount of the solvent may be 10 to 100 parts by weight based on the total weight of 100 parts by weight of the cathode active material. When the amount of the solvent is within this range, the active material layer may be easily formed.

The cathode current collector may have a thickness of 3 $\mu$m to 500 $\mu$m and the material for the cathode current collector is not particularly limited as long as it does not cause a chemical change in the battery and has high conductivity, and may be for example, stainless steel, aluminum, nickel, titanium, heat-treated carbon, and/or aluminum or stainless steel that is surface treated with carbon, nickel, titanium, and/or silver. The current collector may have fine irregularities formed on its surface to increase adhesion to the cathode active material, and may be provided in any suitable form such as a film, a sheet, a foil, a net, a porous body, foam, and/or a non-woven fabric body.

Separately, an anode active material, a binder, a conductive agent, and a solvent may be mixed to prepare a composition for forming an anode active material layer. The anode active material may be or include a material capable of intercalating and deintercalating lithium ions. Non-limiting examples of the anode active material may be a carbon-based material such as graphite and/or carbon, a lithium metal, an alloy thereof, a silicon oxide-based material, and/or the like. According to an embodiment of the present invention, silicon oxide is used.

The binder, conductive agent, and solvent may use the same type of materials used in manufacturing the cathode. The binder is added in an amount of 1 to 50 parts by weight based on 100 parts by weight of the total weight of the anode active material. The conductive agent may be used in an amount of 1 to 5 parts by weight based on 100 parts by weight of the total weight of the anode active material. When the content of the conductive agent is within the above range, the conductivity characteristics of the finally obtained electrode are improved. The solvent may be used in an amount of 1 to 10 parts by weight based on the total weight, 100 parts by weight of the anode active material. When the amount of the solvent is within this range, the anode active material layer may be easily formed.

The anode current collector may have a thickness of 3 $\mu$m to 500 $\mu$m. The material for the anode current collector is not particularly limited as long as it does not cause a chemical change in the battery and has high conductivity. Non-limiting examples may include copper; stainless steel; aluminum; nickel; titanium; heat-treated carbon; copper and/or stainless steel surface-treated with carbon, nickel, titanium, and/or silver; an aluminum-cadmium alloy; and/or the like. The anode current collector may have fine irregularities formed on the surface to increase the adhesion to the anode active materials, and may be provided in any suitable form (such as a film, a sheet, a foil, a net, a porous body, foam, and/or a non-woven fabric body), similar to the cathode current collector.

A separator may be disposed between the cathode and the anode to be wound or laminated to form an electrode assembly. The separator may have a pore diameter of 0.01 $\mu$m to 10 $\mu$m, and a thickness of 5 $\mu$m to 300 $\mu$m. Specific examples thereof may include an olefin-based polymer such as polypropylene, polyethylene, and the like; or a sheet or a nonwoven fabric formed of a glass fiber. When a solid electrolyte such as a polymer is used as the electrolyte, the solid electrolyte may also serve as the separator.

When the electrode assembly is accommodated in a case, an electrolyte is injected, and the resultant obtained is sealed, a lithium secondary battery is completed. The electrolyte may be a non-aqueous electrolyte including a non-aqueous solvent and a lithium salt, an organic solid electrolyte, an inorganic solid electrolyte, and the like. The non-aqueous electrolyte may be or include, for example, an aprotic organic solvent, for example, N-methyl-2-pyrrolidinone, propylene carbonate, ethylene carbonate, butylene carbonate, dimethyl carbonate, diethyl carbonate, gamma-butyrolactone, 1,2-dimethoxyethane, 2-methyl tetrahydrofuran, dimethylsulfoxide, 1,3-dioxolane, formamide, N,N-dimethyl formamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like. The lithium salt may be a material that is readily soluble in the non-aqueous electrolyte, and non-limiting examples thereof may be LiCl, LiBr, LiI, LiClO4, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lithium lower aliphatic carboxylate, lithium tetraphenyl borate, lithium imide, and the like.

Non-limiting examples of the organic solid electrolyte may be a polyethylene derivative, a polyethylene oxide derivative, a polypropylene oxide derivative, a phosphoric acid ester polymer, polyester sulfide, polyvinyl alcohol, polyvinylidene fluoride, and the like

Non-limiting examples of the inorganic solid electrolyte may be LisN, LiI, $Li_5NI_2$, $Li_3N$-LiI-LiOH, $Li_2SiS_3$, $Li_4SiO_4$, $Li_4SiO_4$-LiI-LiOH, $Li_3PO_4$-$Li_2S$-$SiS_2$, and the like.

Also, the lithium secondary battery forms a battery pack with a circuit, and a single or multiple pack may be used for all devices requiring high capacity and high power as needed. For example, it may be used for a laptop, a smart phone, electric vehicle and the like. In addition, the lithium secondary battery has excellent storage stability, cycle-life characteristics, and high-rate characteristics at high temperatures, and thus may be used in an electric vehicle (EV). For example, it may be used for a hybrid vehicle such as a plug-in hybrid electric vehicle (PHEV).

The present invention is explained in more detail in the following examples and comparative examples. It is to be understood, however, that the examples are for the purpose of illustration and are not to be construed as limiting the present invention.

**Examples**

**Example 1**

(Preparation of Cathode Active Material)

In a reactor into which $Ni_{0.945}Co_{0.04}Al_{0.015}(OH)_2$ and distilled water were added, after supplying $N_2$ gas at 4000 sccm, an aqueous solution in the reactor was stirred at 300 rpm to 600 rpm, while maintained at 45 °C. Subsequently, a 2 M manganese sulfate aqueous solution and a 5.5 M NaOH aqueous solution were continuously added to the reactor for 30 minutes to 1 hour. While a pH concentration of the reactor was maintained at 10 to 12, 2 mol% of an Mn compound was coated on nickel-based composite metal hydroxide. The nickel-based composite metal hydroxide coated with the Mn compound was dried in a vacuum drier at a final temperature of 120 °C.

Subsequently, the nickel-based composite metal hydroxide was mixed with lithium hydroxide in a molar ratio of 1:1 and then, fired at 720 °C for 5 hours, obtaining $Li[Ni_{0.926}Co_{0.039}Al_{0.015}Mn_{0.02}]O_2$ cathode active material powder.

(Manufacture of Cathode)

94 wt% of the cathode active material, 3 wt% of ketjen black, and 3 wt% of polyvinylidene fluoride were mixed in an N-methyl pyrrolidone solvent, preparing cathode active material slurry. The cathode active material slurry was coated on an Al foil and then, dried and compressed, manufacturing a cathode.

(Manufacture of Coin Cell)

The manufactured cathode, a lithium metal as a counter electrode, a PTFE separator, and a solution in which 1.15 M $LiPF_6$ was dissolved in a mixed solvent of EC (ethylene carbonate), DEC (diethyl carbonate), and EMC (ethylmethyl carbonate) (in a volume ratio of 3:4:3) as an electrolyte were used to manufacture a coin cell.

**Example 2**

A cathode and a coin cell were manufactured in the same manner as in Example 1 except that the Mn coating was changed into 0.5 mol%.

**Example 3**

A cathode and a coin cell were manufactured in the same manner as in Example 1 except that the Mn coating was changed into 1 mol%.

**Example 4**

A cathode and a coin cell were manufactured in the same manner as in Example 1 except that $Ni_{0.945}Co_{0.04}Al_{0.015}O_2$ was used instead of the $Ni_{0.945}Co_{0.04}Al_{0.015}(OH)_2$, and the Mn coating was changed into 0.5 mol%.

**Comparative Example 1**

(Preparation of Cathode Active Material)

$Ni_{0.945}Co_{0.04}Al_{0.015}(OH)_2$ and distilled water were put in a reactor and stirred for predetermined time, and manganese acetate, $C_4H_6MnO_4$, was added thereto and then, simultaneously stirred. The stirred mixture was dried at 80 °C, obtaining nickel-based composite metal hydroxide coated with an Mn compound. Subsequently, the hydroxide was heat-treated at 450 °C, obtaining nickel-based composite metal oxide coated with $MnO_2$.
Subsequently, the nickel-based composite metal oxide was used to manufacture a cathode and a coin cell in the same manner as in Example 1. **Evaluation 1.** EDS (Energy dispersive X-ray spectroscopy) Measurement

**Evaluation 1-1. Measurement of Manganese Distribution between Primary Particles**

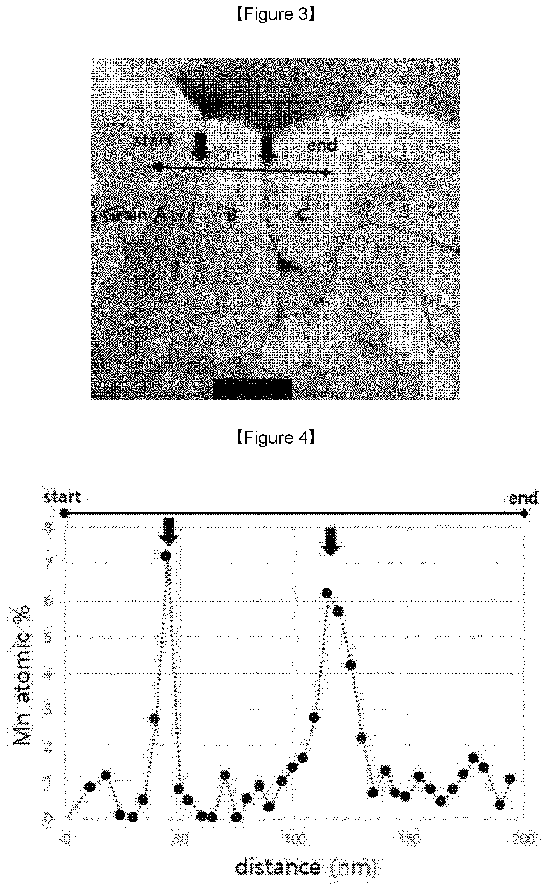

The cathode active material of Example 1 was EDS-analyzed with respect to a cross-section in order to confirm whether or not Mn was well distributed on the interface of primary particles in a surface portion of secondary particles of the cathode active material. FIG. 3 is a STEM image (HAADF) showing a cross-section of a plurality of primary particles in the cathode active material used for the EDS analysis, and FIG. 4 is a graph showing a content of manganese distributed in the plurality of primary particle (A, B, and C) of FIG. 3.
Referring to FIGS. 3 and 4, an arrow-pointing part corresponds to an interface of the primary particles present in the surface portion of the secondary particles, which shows that manganese was present at significantly higher mol% on the corresponding interface than the inside of the primary particles. This result shows that the manganese was coated on grain boundaries of the primary particles on the surface portion of the secondary particles.

**Evaluation 1-2. Measurement of Manganese Distribution in the Surface Portion and Central Portion of Cathode Active Material**

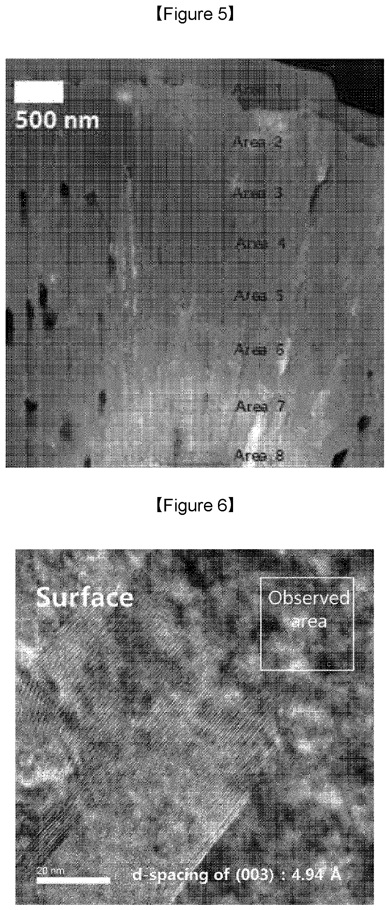

In order to confirm a distribution of Mn on the surface portion and the central portion of the cathode active material, the cathode active material of Example 1 was EDS-analyzed with respect to a cross-section. FIG. 5 is a STEM image (HAADF) showing the surface portion and the central portion of the cross-section of the cathode active material. In FIG. 5, Area 1 to Area 3 correspond to the surface portion of the cathode active material, and Area 4 to 8 correspond to the central portion of the cathode active material. In addition, mol% of metal at each Area in FIG. 5 was measured, and the results are shown in Table 1. In Table 1, a content of each metal is based on a total content of metals excluding lithium.

(Table 1)

| Mol% | Area 1 | Area 2 | Area 3 | Area 4 | Area 5 | Area 6 | Area 7 | Area 8 |
|------|--------|--------|--------|--------|--------|--------|--------|--------|
| Ni | 85.03 | 88.76 | 87.89 | 94.71 | 87.34 | 93.79 | 92.69 | 94.35 |
| Co | 3.71 | 3.39 | 4.54 | 3.47 | 4.71 | 3.72 | 2.13 | 2.24 |
| Al | 1.45 | 4.74 | 5.71 | 0.00 | 7.15 | 1.44 | 4.21 | 2.81 |

(continued)

| Mol% | Area 1 | Area 2 | Area 3 | Area 4 | Area 5 | Area 6 | Area 7 | Area 8 |
|------|--------|--------|--------|--------|--------|--------|--------|--------|
| Mn | 9.81 | 3.11 | 1.86 | 1.82 | 0.80 | 1.05 | 0.97 | 0.60 |

As shown in Table 1, the larger a content of Mn, the closer to the surface of the cathode active material. Accordingly, the cathode active material of Example 1 exhibited that the manganese was concentratively coated on the surface portion.

**Evaluation 2.** c-axis Length (d-spacing) Measurement

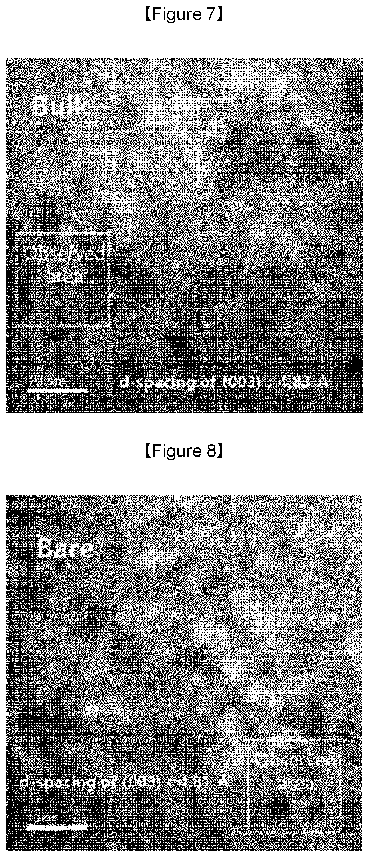

In order to confirm whether or not Mn was coated on the grain boundaries of the primary particles, the cathode active material of Example 1 was measured with respect to a c-axis length of the primary particles in the surface portion of the secondary particles and a c-axis length of the primary particles in the central portion (bulk) through STEM analysis, and the results are respectively shown in FIG. 6 and FIG. 7. FIG. 6 is a STEM photograph of the primary particles on the surface portion of the secondary particles of the cathode active material of Example 1, and FIG. 7 is a STEM photograph of the primary particles in the central portion of the secondary particles of the cathode active material of Example 1. In addition, for comparison therewith, the cathode active material of Comparative Example 1 was measured with respect to a c-axis length of primary particles through STEM analysis, and the result is shown in FIG. 8. FIG. 8 is a STEM photograph showing the primary particles of the cathode active material of Comparative Example 1.

Referring to FIGS. 6 and 7, the c-axis lengths were different with each other according to a position of the primary particles in the secondary particles. In other words, the c-axis length of the primary particles in the surface portion of the secondary particles was 4.94 Å, which was longer than 4.83 Å, which was the c-axis length of the primary particles in the central portion of the secondary particles, and accordingly, the manganese turned out to be coated on the boundaries of the primary particles in the surface portion of the secondary particles and lengthened the c-axis length.

On the other hand, FIG. 8 shows a c-axis length of primary particles of the cathode active material not coated with manganese, wherein the c-axis length was 4.81 Å, which was almost equal to the c-axis length of the primary particles in the center of the secondary particles of Example 1. This result shows that manganese was coated on the interface of the primary particles of the secondary particles of the cathode active material, that is, coated on the grain boundaries thereof.

**Evaluation 3.** X-ray diffraction (XRD) Data Measurement

An X-ray diffraction analysis was performed as follows. An X-ray diffraction equipment was used at a scan rate of 0.2 theta/step by using a Cu-Ka wavelength. In addition, a voltage and a current of an X-ray tube were respectively 40 KV and 40 mA, and a divergence slit was set at 0.5°, a Soller slit was set at 0.04 rad, and a wavelength was set to 8.05 keV (@50%PHD).

Subsequently, FWHM was obtained by Rietveld-fitting the obtained measurements with a HighScore Plus program.

The XRD data results of the cathode active materials of Examples 2 to 4 and Comparative Example 1 are shown in Table 2.

(Table 2)

| | Example 2 | Example 3 | Example 4 | Comparative Example 1 |
|---|-----------|-----------|-----------|------------------------|
| $FWHM_{(003)}$ | 0.152° | 0.162° | 0.158° | 0.121° |

In general, the larger a full width at half maximum (FWHM), the larger a coating amount of manganese. As shown in Table 2, Examples 2 to 4 exhibited a higher full width at half maximum (FWHM) than Comparative Example 1, which shows that the cathode active materials of Example 2 to 4 prepared in a co-precipitation method were coated with manganese.

**Evaluation 4.** Evaluation of Initial Charge and Discharge Capacity and Charge and Discharge Efficiency

The coin cells according to Examples 2 to 4 and Comparative Example 1 were once charged and discharged at 0.2 C and then, measured with respect to charge capacity, discharge capacity, and charge and discharge efficiency. The results are shown in Table 3.

(Table 3)

| | Charge capacity (mAh/g) | Discharge capacity (mAh/g) | Charge and discharge efficiency (%) |
|---|---|---|---|
| Example 2 | 245.5 | 223.9 | 91.2 % |
| Example 3 | 243.0 | 220.8 | 90.9 % |
| Example 4 | 245.0 | 223.2 | 91.1 % |
| Comparative Example 1 | 241.5 | 208.4 | 86.3 % |

As shown in Table 3, the coin cells according to Examples 2 to 4 exhibited more excellent charge and discharge efficiency than the cell according to Comparative Example 1.

**Evaluation 5.** Evaluation of Cycle Life Characteristics

The coin cells according to Examples 2 to 4 and Comparative Example 1 were constant current-charged at a current rate of 1.0 C to a voltage of 4.30 V (vs. Li) and subsequently, cut off at a current rate of 0.05 C in the constant voltage mode, while the 4.30 V was maintained, at 45 °C. Subsequently, the coin cells were constant current-discharged down to a voltage of 3.0 V (vs. Li) at a current rate of 1.0 C, which was regarded as one cycle and repeated up to $50^{th}$ cycles. In all the charge and discharge cycles, a pause of 10 minutes was set after every charge/discharge cycle. The coin cells were measured with respect to a cycle-life (capacity retention) at the $50^{th}$ cycle, and the results are shown in Table 4.

The capacity retention was calculated according to Equation 1:

[Equation 1]

$$\text{Capacity retention rate at } 50^{th} \text{ cycle [\%]} = [\text{Discharge capacity at } 50^{th} \text{ cycle}$$

$$/ \text{ Discharge capacity at } 1^{st} \text{ cycle]} \times 100 \text{ [\%]}$$

(Table 4)

| | Example 2 | Example 3 | Example 4 | Comparative Example 1 |
|---|---|---|---|---|
| Cycle-life at $50^{th}$ cycle | 97.2% | 97.5% | 96.3% | 88.3% |

As shown in Table 4, it can be seen that the charge and discharge efficiency of the coin cells manufactured in Examples 2 to 4 is better than that of Comparative Example 1.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claims.

**Claims**

1. A cathode active material for a lithium secondary battery, comprising

   a nickel-based composite metal oxide including a secondary particle in which a plurality of primary particles are agglomerated,
   wherein the secondary particle includes a central portion and a surface portion,
   the surface portion includes a nickel-based composite metal oxide doped with manganese, and
   an amount of manganese present in the grain boundaries of the plurality of primary particles present in the surface portion is greater than an amount of manganese present inside the primary particles.

2. The cathode active material for the lithium secondary battery of claim 1, wherein
the nickel-based composite metal oxide doped with manganese includes 0.1 mol% to 5 mol% of manganese based on the total amount (mol%) of the metal of the nickel-based composite metal oxide.

3. The cathode active material for the lithium secondary battery of claim 1, wherein
the central portion of the secondary particle does not include the nickel-based composite metal oxide doped with manganese.

4. The cathode active material for the lithium secondary battery of claim 1, wherein
the cathode active material has a concentration gradient in which the concentration of manganese continuously decreases from the surface portion of the secondary particle to the central portion of the secondary particle.

5. The cathode active material for the lithium secondary battery of claim 1, wherein
the surface portion of the secondary particle is within 50 length% of the total distance from the center to the outermost surface of the secondary particle in the direction from the outermost surface to the center.

6. The cathode active material for the lithium secondary battery of claim 1, wherein

the nickel-based composite metal oxide doped with manganese is a compound represented by Chemical Formula 1:

[Chemical Formula 1]        $LiNi_{1-x-y-z}Co_xMn_yM_zO_2$

wherein, in Chemical Formula 1,
$0 < x \leq 0.05$, $0.001 \leq y \leq 0.05$, and $0 \leq z \leq 0.02$, and M is at least one metal element selected from Ni, Mn, Al, Cr, Fe, V, Mg, Ti, Zr, Nb, Mo, W, Cu, Zn, Ga, In, Sn, La, B, Ta, Pr, Si, Ba, and Ce.

7. The cathode active material for the lithium secondary battery of claim 1, wherein
the nickel-based composite metal oxide doped with manganese includes a layered structure oxide, a spinel structure oxide, a halite structure oxide, or a combination thereof.

8. The cathode active material for the lithium secondary battery of claim 1, wherein
the surface portion further includes a lithium manganese oxide.

9. The cathode active material for the lithium secondary battery of claim 8, wherein
the lithium manganese oxide includes $LiMnO_2$, $LiMn_2O_4$, or a combination thereof.

10. The cathode active material for the lithium secondary battery of claim 1, wherein
a $FWHM_{(003)}$ value of the cathode active material by X-ray diffraction analysis is in the range of 0.1° to 0.2° (degree).

11. The cathode active material for the lithium secondary battery of claim 1, wherein
a c-axis length (d-spacing) value of the primary particles present in the surface portion of the secondary particle of the cathode active material is greater than or equal to 4.88 Å.

12. The cathode active material for the lithium secondary battery of claim 1, wherein
a size of the primary particles of the cathode active material is 100 nm to 800 nm.

13. A method of preparing a cathode active material for a lithium secondary battery, comprising

preparing a dispersion in which a nickel-based composite metal compound including secondary particles in which a plurality of primary particles are agglomerated is dispersed in a solvent (wherein the secondary particles have a central portion and a surface portion),
adding an aqueous solution of manganese salt and a precipitant to the dispersion in an atmosphere having a reduced oxygen content to prepare a nickel-based composite metal compound coated with a manganese salt (wherein the manganese salt is coated on the primary particles of the surface portion), and
drying the nickel-based composite metal compound coated with the manganese salt and mixing it with a lithium source followed by heat-treatment.

14. The method of preparing the cathode active material for the lithium secondary battery of claim 13, wherein

the nickel-based composite metal compound is represented by Chemical Formula 2 or Chemical Formula 3:

[Chemical Formula 2] $Ni_{1-x-y-z}Co_xM_y(OH)_2Mn_wO_q$

wherein, in Chemical Formula 2,
$0 < x \leq 0.05$, $0 \leq y \leq 0.02$, $0 < w \leq 3$, $0 < q \leq 4$, and M is at least one metal element selected from Ni, Mn, Al, Cr, Fe, V, Mg, Ti, Zr, Nb, Mo, W, Cu, Zn, Ga, In, Sn, La, and Ce,

[Chemical Formula 3] $Ni_{1-x-y-z}Co_xM_yO_2Mn_wO_q$

wherein, in Chemical Formula 3,
$0 < x \leq 0.05$, $0 \leq y \leq 0.02$, $0 < w \leq 3$, $0 < q \leq 4$, and M is at least one metal element selected from Ni, Mn, Al, Cr, Fe, V, Mg, Ti, Zr, Nb, Mo, W, Cu, Zn, Ga, In, Sn, La, and Ce.

15. The method of preparing the cathode active material for the lithium secondary battery of claim 13, wherein the manganese salt is selected from manganese sulfate, manganese nitrate, manganese acetate, and a combination thereof.

16. The method of preparing the cathode active material for the lithium secondary battery of claim 13, wherein

the atmosphere having the reduced oxygen content is obtained by injecting an inert gas, and
the inert gas is nitrogen ($N_2$).

17. The method of preparing the cathode active material for the lithium secondary battery of claim 16, wherein an injection rate of the inert gas is 50 sccm to 5000 sccm.

18. The method of preparing the cathode active material for the lithium secondary battery of claim 13, wherein the drying is performed at 100 °C to 200 °C.

19. The method of preparing the cathode active material for the lithium secondary battery of claim 13, wherein the method further includes heat-treating at 350 °C to 600 °C before mixing the nickel-based composite metal compound coated with the manganese salt with a lithium source.

20. A lithium secondary battery, comprising

a cathode including the cathode active material of any one of claim 1 to claim 12;
an anode including an anode active material; and
an electrolyte.

【Figure 1】

【Figure 2】

【Figure 3】

【Figure 4】

【Figure 5】

【Figure 6】

【Figure 7】

【Figure 8】

## INTERNATIONAL SEARCH REPORT

| International application No. |
| --- |
| **PCT/KR2021/008864** |

| A. CLASSIFICATION OF SUBJECT MATTER |
| --- |
| **H01M 4/525**(2010.01)i; **H01M 4/505**(2010.01)i; **H01M 4/36**(2006.01)i; **H01M 10/052**(2010.01)i; **C01G 53/00**(2006.01)i |
| According to International Patent Classification (IPC) or to both national classification and IPC |

| B. FIELDS SEARCHED |
| --- |
| Minimum documentation searched (classification system followed by classification symbols) |
| H01M 4/525(2010.01); C01G 53/00(2006.01); H01M 10/052(2010.01); H01M 4/485(2010.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 양극 활물질(cathode active material), 니켈(nickel), 망간(manganese), 산화물(oxide), 농도(concentration), 코팅(coating), 열처리(heating), 경계(boundary), X선회절(x-ray diffraction, XRD), 스피넬(spinel), 암염(rock-salt), 층형(layered) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | KR 10-2019-0055729 A (ECOPRO BM CO., LTD.) 23 May 2019 (2019-05-23)<br>　　See paragraphs [0012]-[0016], [0024]-[0027], [0072]-[0075], [0080] and [0091]-[0094]<br>　　and figures 1-6, 8 and 9. | 1-12,20 |
| A | | 13-19 |
| X | JP 2018-070419 A (SUMITOMO METAL MINING CO., LTD.) 10 May 2018 (2018-05-10)<br>　　See paragraphs [0027], [0033], [0049]-[0069], [0083]-[0094], [0109] and [0110]-[0116]<br>　　and figures 1 and 3. | 13-18 |
| Y | | 19 |
| Y | KR 10-2017-0076723 A (SUMITOMO METAL MINING CO., LTD.) 04 July 2017 (2017-07-04)<br>　　See paragraphs [0111]-[0112]. | 19 |
| A | KR 10-1555594 B1 (ECOPRO CO., LTD.) 06 October 2015 (2015-10-06)<br>　　See claims 1, 2 and 4-12 and figures 1-4. | 1-20 |

☑ Further documents are listed in the continuation of Box C. 　　☑ See patent family annex.

| | |
| --- | --- |
| * 　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| **27 October 2021** | **27 October 2021** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/008864** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2013-0138147 A (IUCF-HYU (INDUSTRY-UNIVERSITY COOPERATION FOUNDATION HANYANG UNIVERSITY) et al.) 18 December 2013 (2013-12-18)<br>See claims 1-24 and figure 1. | 1-20 |

Form PCT/ISA/210 (second sheet) (July 2019)

INTERNATIONAL SEARCH REPORT
Information on patent family members

International application No.

**PCT/KR2021/008864**

| Patent document cited in search report | | | Publication date (day/month/year) | Patent family member(s) | | | Publication date (day/month/year) |
|---|---|---|---|---|---|---|---|
| KR | 10-2019-0055729 | A | 23 May 2019 | CN | 109786730 | A | 21 May 2019 |
| | | | | EP | 3486978 | A1 | 22 May 2019 |
| | | | | JP | 2019-091692 | A | 13 June 2019 |
| | | | | JP | 6894419 | B2 | 30 June 2021 |
| | | | | KR | 10-2130484 | B1 | 06 July 2020 |
| | | | | US | 10862119 | B2 | 08 December 2020 |
| | | | | US | 2019-0148725 | A1 | 16 May 2019 |
| JP | 2018-070419 | A | 10 May 2018 | CN | 110121481 | A | 13 August 2019 |
| | | | | EP | 3533764 | A1 | 04 September 2019 |
| | | | | JP | 6855752 | B2 | 07 April 2021 |
| | | | | KR | 10-2019-0078603 | A | 04 July 2019 |
| | | | | US | 2020-0052295 | A1 | 13 February 2020 |
| | | | | WO | 2018-079809 | A1 | 03 May 2018 |
| KR | 10-2017-0076723 | A | 04 July 2017 | CN | 107108264 | A | 29 August 2017 |
| | | | | JP | 6658534 | B2 | 04 March 2020 |
| | | | | US | 10593942 | B2 | 17 March 2020 |
| | | | | US | 2017-0324090 | A1 | 09 November 2017 |
| | | | | US | 2020-0161653 | A1 | 21 May 2020 |
| | | | | WO | 2016-068263 | A1 | 06 May 2016 |
| KR | 10-1555594 | B1 | 06 October 2015 | CN | 105993090 | A | 05 October 2016 |
| | | | | EP | 3024070 | A1 | 25 May 2016 |
| | | | | HU | E052913 | T2 | 28 May 2021 |
| | | | | JP | 2017-536686 | A | 07 December 2017 |
| | | | | JP | 2020-109772 | A | 16 July 2020 |
| | | | | US | 10522823 | B2 | 31 December 2019 |
| | | | | US | 2016-0359165 | A1 | 08 December 2016 |
| | | | | WO | 2016-052820 | A1 | 07 April 2016 |
| KR | 10-2013-0138147 | A | 18 December 2013 | CN | 104521039 | A | 15 April 2015 |
| | | | | CN | 105576198 | A | 11 May 2016 |
| | | | | CN | 107093740 | A | 25 August 2017 |
| | | | | CN | 107293689 | A | 24 October 2017 |
| | | | | EP | 2882013 | A1 | 10 June 2015 |
| | | | | EP | 3016184 | A2 | 04 May 2016 |
| | | | | EP | 3236517 | A1 | 25 October 2017 |
| | | | | KR | 10-1611784 | B1 | 14 April 2016 |
| | | | | KR | 10-1720042 | B1 | 30 March 2017 |
| | | | | KR | 10-1802568 | B1 | 30 November 2017 |
| | | | | KR | 10-1849719 | B1 | 19 April 2018 |
| | | | | KR | 10-2013-0138073 | A | 18 December 2013 |
| | | | | KR | 10-2015-0024371 | A | 06 March 2015 |
| | | | | KR | 10-2016-0043531 | A | 21 April 2016 |
| | | | | KR | 10-2016-0052936 | A | 13 May 2016 |
| | | | | KR | 10-2017-0017969 | A | 15 February 2017 |
| | | | | US | 10224541 | B2 | 05 March 2019 |
| | | | | US | 10283757 | B2 | 07 May 2019 |
| | | | | US | 10950856 | B2 | 16 March 2021 |
| | | | | US | 2014-0158932 | A1 | 12 June 2014 |
| | | | | US | 2016-0049647 | A1 | 18 February 2016 |
| | | | | US | 2016-0218350 | A1 | 28 July 2016 |
| | | | | US | 2019-0148721 | A1 | 16 May 2019 |

Form PCT/ISA/210 (patent family annex) (July 2019)

**INTERNATIONAL SEARCH REPORT**
Information on patent family members

International application No.

**PCT/KR2021/008864**

| Patent document cited in search report | Publication date (day/month/year) | Patent family member(s) | | Publication date (day/month/year) |
|---|---|---|---|---|
| | | US 9337487 | B2 | 10 May 2016 |
| | | WO 2013-183974 | A1 | 12 December 2013 |

Form PCT/ISA/210 (patent family annex) (July 2019)